# EUROPÄISCHE PATENTSCHRIFT

(11) **EP 2 562 959 B1**
(45) Veröffentlichungstag und Bekanntmachung des Hinweises auf die Patenterteilung: **21.08.2013**
(21) Anmeldenummer: 11178289.2
(22) Anmeldetag: 22.08.2011
(51) Int. Cl.: H04L 12/10, H04L 12/28, H04Q 11/00, H04L 12/70

(54) **Verfahren und Vorrichtung zur Steuerung von Bitraten- und Leistungszuständen in Breitband-Zugangsnetzen auf der Grundlage von Verkehrsbedarfsinformationen aus Kundennetzen**
Method and device for controlling bit rate and power states in broadband access networks on the basis of traffic usage information from customer networks
Procédé et dispositif de commande d'états de débit binaires et de rendement dans des réseaux d'accès à large bande sur la base d'informations de besoins de trafic de réseaux clients

(43) Veröffentlichungstag der Anmeldung: 27.02.2013
(73) Patentinhaber: Deutsche Telekom AG, 53113 Bonn (DE)
(72) Erfinder: Lange, Christoph, Dr., 10318 Berlin (DE); Gladisch, Andreas, Dr., 13129 Berlin (DE)
(74) Vertreter: 2K Patentanwälte Blasberg Kewitz & Reichel

(56) Entgegenhaltungen:
- EP-A1- 2 107 734
- EP-A1- 2 330 773
- EP-A1- 2 357 757
- EP-A2- 2 393 235
- WO-A1-01/30039
- US-A1- 2010 235 665
- US-A1- 2011 299 549
- US-B2- 6 850 533

## Beschreibung

### Die Erfindung betrifft

### Gebiet der Erfindung

Die vorliegende Erfindung bezieht sich auf das allgemeine Gebiet der Telekommunikation und nimmt im Speziellen Bezug auf das Breitband-Zugangsnetz in Verbindung mit angeschlossenen Kundennetzen, insbesondere erfolgt eine übergreifende Steuerung zwischen Kunden- und Zugangsnetz mit dem Ziel eine verbesserte Energieeffizienz des Netzbetriebs zu etablieren.

### Hintergrund der Erfindung

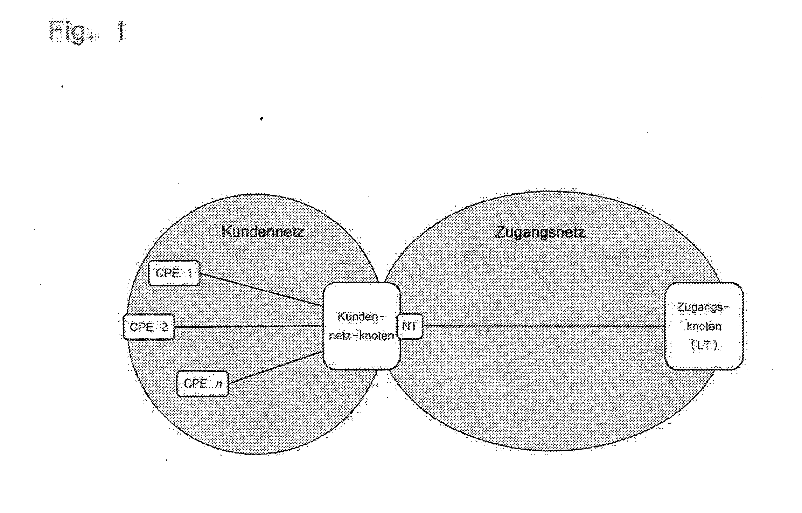

Die der Erfindung zu Grunde liegende Anordnung und Topologie von Netzelementen ist in Fig. 1 dargestellt.

Im Breitbandzugangsnetz kommen für die Anbindung der Endstelle an die Zugangsnetzknoten unterschiedliche Techniken und Systeme zum Einsatz. So werden auf der Kupferdoppelader Varianten der DSL-Technik (digital subscriber line), wie ADSL2/ADSL2+ (asymmetric DSL) und VDSL2 (very-high bit rate DSL) verwendet, während in Glasfaserbasierten Zugangsnetzen PON-Systeme (passive optical network) vielfach favorisiert werden. Sowohl in DSL-Systemen als auch für PON-Systeme sind Betriebszustände mit verringertem Leistungsbedarf (Low Power Modes) definiert, die in verkehrsschwachen Zeiten genutzt werden können. Diese sind jedoch auf den jeweiligen Netzabschnitt beschränkt, also das Kupfer-basierte Zugangsnetz im Fall der DSL-Technik und das optische Zugangsnetz bei PON-Systemen; es erfolgt keine übergreifende Steuerung in Koordination mit angrenzenden Netzabschnitten.

An das Zugangsnetz grenzen Kundennetze an, die unterschiedlich ausgeprägt sein können: Als Heimnetze (im Falle von Privatkunden) und ebenso als Firmennetze (im Falle von Firmenkunden).

Bedingt durch die gestiegene Aufmerksamkeit bezüglich des Energieverbrauchs von Telekommunikationsnetzen in jüngster Vergangenheit haben sich vielfältige Aktivitäten zur Senkung des Energieverbrauchs und zur Steigerung der Energieeffizienz von Netzelementen und Netzabschnitten entwickelt: Es wurden Leistungsmodi in der DSL-Technik (für Kupfer-basierte Zugangsnetze) spezifiziert, die bei verringerter Aktivität (Bitrate) auf der Leitung in einen Modus mit verringerter Leistung schalten [1] und so den Energiebedarf in Abhängigkeit vom Nutzerverhalten senken. Dieser DSL-L2-Modus ist für ADSL2/ADSL2+ standardisiert und wird implementiert, jedoch bisher auf Grund von Schwierigkeiten mit der Dienstgüte und der Leitungsstabilität in Netzen großer Betreiber nicht genutzt. Für VDSL2 ist eine Standardisierung derartiger Leistungsmodi noch nicht erfolgt, jedoch für die nahe Zukunft vorgesehen und in Aussicht gestellt.

Für passive optische Netze als Systemtechnik für optische Zugangsnetze sind ebenfalls Verfahren zur Verbesserung der Energieeffizienz definiert, die sich vorwiegend auf den lastadaptiven Betrieb der ONU (optical network unit) bzw. des ONT (optical network termination) beziehen [2].

Das IEEE (Institute of Electrical and Electronics Engineers) hat einen Standard zum Energy Efficient Ethernet (EEE) verabschiedet [3],der auf eine Verringerung des Energieverbrauchs in Ethernet-basierten Komponenten abzielt. Ethernet-Komponenten werden häufig in Kundennetzen, sowohl in Firmen- als auch in Heimnetzen, verwendet.

Allen diesen Verfahren zur Senkung des Energieverbrauchs gemeinsam ist, dass sie sich auf die Verringerung des Energieverbrauchs eines ganz speziellen und abgegrenzten Netzsegments, in der Regel eines einzelnen Links, orientieren; es ist keine übergreifende Steuerung und ein dafür notwendiger Informationsaustausch zwischen den Netzabschnitten vorgesehen. Die Verfahren sind link-autonom.

Zusammenfassend kann festgestellt werden, dass derzeit Energiesparfunktionen in Kunden- und Zugangsnetzen auf das jeweilige Netzsegment beschränkt sind und diese Techniken link-autonom arbeiten sowie keine übergreifende Steuerung zwischen diesen Netzabschnitten existiert.

Die beschriebenen Ansätze zur Erhöhung der Energieeffizienz durch Leistungsmanagement, oder allgemeiner ausgedrückt lastadaptiven Betrieb, sind auf einzelne Netzabschnitte beschränkt und daher in ihrer Wirkung bezüglich erzielbarer Energieeffizienzverbesserungen begrenzt. Es fehlen übergreifende Konzepte, die den Energieverbrauch auf Grund eines Informationsaustausches zwischen Kunden- und Zugangsnetz steuern und so größere Energieeinsparungen bewirken können. Darüber hinaus sind die Leistungsmanagementmechanismen in den unterschiedlichen Netzsegmenten auf Grund der historischen Netz- und Technologieentwicklung im Allgemeinen voneinander prinzipiell verschieden und nicht ohne weiteres zueinander kompatibel.

Erfahrungen mit dem Leistungsmanagement über Leistungsmodi des DSL haben beispielsweise gezeigt, dass diese Verfahren zur Leitungsinstabilität und zu unerwünschten Problemen bezüglich der Dienstgüte (Quality of Service, QoS) wegen hoher Laufzeiten führen können. Dies ist insbesondere im Beispiel des DSL, das bekanntlich auf Kupfer-Doppeladern betrieben wird, dadurch bedingt, dass sich die Störumgebung für die benachbarten Aderpaare und damit DSL-Systeme durch das zeitlich fluktuierende Nebensprechen schnell ändern kann, wenn die Leistungsmodi und -pegel durch das Leistungsmanagement auf Grund der sich ändernden Bitratenanforderungen ebenfalls schnell geschaltet werden. Es wird erwartet, dass bei Nutzung einer übergreifenden Steuerung höhere Energieeinsparungen erzielt werden können und darüber hinaus die Leitungsstabilität verbessert werden kann.

In PONs wird das Leistungsmanagement in der ONU ebenfalls autonom in Abhängigkeit von der Bitrate gehandhabt: Hier wird bei Nutzung einer übergreifenden Steuerung mit Informationen aus dem Kundennetz eine bessere Energieeffizienz erwartet, da dann die ONU schon rechtzeitig in den aktiven oder auch den inaktiven Zustand versetzt werden kann, basierend auf den externen Informationen aus dem Kundennetz.

Aus der EP 2 330 773 Al ist ein Verfahren bekannt bei dem ein Kunden-Endgerät von einem Netzknotengerät aus dem Stand By Betrieb aufgeweckt wird.

Aus der US 6 850 533 B2 ist ein Verfahren bekannt bei dem ein Kabel-Modem auf den single-tone DMT mode heruntergeschaltet wird.

Gegenstand der vorliegenden Erfindung ist ein Verfahren, das es gestattet, auf der Grundlage von Informationen, die aus dem Kundennetz geliefert werden, die zugehörige Verbindung im Zugangsnetz bezüglich der Leistungsmodi lastadaptiv zu steuern. Die Vorgehensweise und die Methoden werden in dieser Erfindungsbeschreibung beispielhaft an Hand eines Ausführungsbeispiels mit Heimnetz und Zugangsnetz erläutert; die Ausführungen lassen sich prinzipiell auf alle Arten von Kunden- und Zugangsnetzen übertragen, die eine nur auf den Bezugsbereich des jeweiligen Netzsegments beschränkte Leistungsmanagementfunktionalität ohne Interaktion zwischen den beteiligten Netzsegmenten aufweisen.

### Überblick über die Erfindung:

Die vorliegende Erfindung beschreibt ein Verfahren zur übergreifenden Steuerung der verschiedenen Leistungsmodi in Zugangsnetzen im Verbund mit den Leistungsmodi in Kundennetzen. Systeme, Verfahren und Vorrichtungen nach der vorliegenden Erfindung stellen ein Verfahren und einen Vorschlag zu einer praktischen Umsetzung einer übergreifenden Steuerung zwischen Kunden- und Zugangsnetzen dar, die einen zuverlässigen, stabilen Betrieb dieser Netze in unterschiedlichen Leistungszuständen gestatten und damit einer Energieeinsparung dienen. Es werden Signalisierungsinformationen aus dem Kundennetz verwendet, um die Leistungszustände im Zugangsnetz zu steuern. Im Anwendungsbeispiel werden Nachrichten des Energy Efficient Ethernet dazu verwendet, um die Leistungszustände auf der Zugangsleitung (z. B. DSL oder PON) zu steuern.

Im Einzelnen handelt es sich um ein Verfahren zur Steuerung des Energieverbrauchs in einem Zugangsnetz, wobei das Zugangsnetz über einen Kundennetzknoten mit einem Kundennetz verbunden ist. Das Zugangsnetz wird dabei zum Kundennetz durch einen Kundennetzknoten (NT) und zum weiterführenden Netz durch einen Zugangsknoten (LT) terminiert. Zwischen diesen beiden Zugangsknoten kann die Geschwindigkeit beeinflusst werden, z.B. durch Reduzierung der Bitrate, oder durch Veränderung des Modulationsverfahrens, so dass Energie eingespart werden kann. Es ist ebenfalls denkbar, dass bestimmte Komponenten auf Stand-by geschaltet werden, oder andere die Effizienz steigernde Ansätze umgesetzt werden. Das Zugangsnetz kann zum Beispiel DSL, oder eine optische PON Variante sein. Der Kundennetzknoten (HGW) umfasst in der Regel eine CPU, einen Speicher, eine Stromversorgungseinheit und eine Auswerteeinheit. Der Kunden-Netzwerkknoten kann eine Vielzahl von Schnittstellen haben. Einerseits zum Zugangsnetz und andererseits können Netzwerkschnittstellen, wie Ethernet-Schnittstellen, W-LAN-Schnittstellen, DECT-Schnittstellen zu unterschiedlichsten Geräten gegeben sein. So ist es möglich, ein Internettelefon, ein Netzwerk Attached Storage (NAS), PCs und andere Komponenten anzuschließen.

Die Auswerteinheit überprüft die Aktivität im Kundennetz, umfassend die Schritte:
- Beim Feststellen einer geringen Aktivität im Kundennetz in Richtung des Zugangsnetzes, Herunterschalten der Übertragungsgeschwindigkeit im Zugangsnetz;
- Beim Feststellen einer hohen Aktivität vom Kundennetz in Richtung des Zugangsnetzes nach einer vorherigen geringen Aktivität erfolgt ein Hochschalten der Übertragungsgeschwindigkeit im Zugangsnetz.

Das Festellen eines Aktivitätsmusters kann zum Beispiel durch Analyse und Zählen der gesendeten Pakete erfolgen, wobei deren Funktion, Größe und Inhalt berücksichtigt werden kann. Werden zum Beispiel lediglich Statuspakete gesendet, mit einer geringen Payload, so kann es möglich sein, diese als eher geringe Netzwerkaktivität zu bestimmen. Sollten hingegen große Datenmengen mit einer großen Payload/Nutzlast aus dem Netz empfangen werden, wie zum Beispiel bei Multi-Media-Streaming, oder FTP, oder anderen Dateidownloads, so kann von einer höheren Last ausgegangen werden. So können auch Analysen auf der Basis des Protokolls erfolgen. Werden zum Beispiel FTP-Datenpakete gesendet, oder Multimediasystem-Daten (RTP), so kann von einer höheren Last ausgegangen werden. Wenn hingegen regelmäßig POP/IMAP Anfragen an einen Mailaccount gesendet werden, also regelmäßig wiederkehrende Zugriffsprotokolle, so kann von einer geringen Last ausgegangen werden. Es ist zum Beispiel auch möglich, dass die Abfrage eines Accounts und das Herunterladen der E-Mails analysiert wird, so dass falls tatsächlich die E-Mails heruntergeladen werden, erst dann ein Hochschalten der Datenrate erfolgt.

In einer weiteren Ausführungsform, wenn das Kundennetzwerk ein Ethernet ist, kann die Auswerteinheit Nachrichten nach dem Energy Efficient Ethernet Standard überwachen, um anhand deren Anzahl eine geringe Aktivität, oder eine hohe Aktivität festzustellen.

So kann z.B. die Anzahl von Sleep-Paketen oder Wake-Pakten nach dem Energy Efficient Ethernet Standard überwacht werden, um geringe oder hohe Aktivität festzustellen.

Ein weiterer Teil der Erfindung, der das Verfahren umsetzt ist der Kundennetzwerkknoten, zur Anordnung zwischen einem Kundennetz und einem Zugangsnetz, mit Schnittstellen für das Zugangsnetz und das Kundennetz. Dieser umfasst eine Auswerteinheit, die so ausgestattet und eingerichtet ist, dass eine Überprüfung des Netzwerkverkehrs erfolgt, wobei
- beim Feststellen einer geringen Aktivität im Kundennetz in Richtung des Zugangsnetzes, ein Herunterschalten der Übertragungsgeschwindigkeit im Zugangsnetz durchführbar ist;
- beim Feststellen einer hohen Aktivität vom Kundennetz in Richtung des Zugangsnetzes nach einer vorherigen geringen Aktivität ein Hochschalten der Übertragungsgeschwindigkeit im Zugangsnetz durchführbar ist.

Das Herunterschalten der Geschwindigkeit kann zwischen dem Kundennetzknoten und dem Zugangsknoten durch ein spezifisches Protokoll mitgeteilt werden, oder mit Hilfe von bestehenden Synchronisationstechniken. Gemeint ist die Kommunikation zwischen HGW und DSLAM (oder OLT) und nicht zwischen den HGWs der Teilnehmer). Es ist mögliche, bestehende Techniken dazu mitzunutzen (wie es z. B. bei der Aushandlung der L0-und L2-Modi im DSL jetzt schon geschieht) oder es kann dazu auch ein neu zu entwickelndes (einfaches) signalisierungsprotokoll genutzt werden. Auf diese Weise kann dann jeweils die Aktivität zwischen HGW und DSLAM/OLT signalisiert werden (also z. B. steigende Bitratenanforderung aus dem Heimnetz in Kürze zu erwarten).

Es wird erwartet, dass sich auf diese Weise in Telekommunikationsnetzen, insbesondere in Kundennetzen und Zugangsnetzen, der Betrieb zuverlässig energieeffizienter gestalten lässt und deshalb, verglichen mit heutigen Netzen, ein kostengünstigerer Netzbetrieb ermöglicht wird.

### Figuren Beschreibung:

- Figur 1: zeigt illustrativ die prinzipielle Netztopologie, die der vorliegenden Erfindung zu Grunde liegt.
- Figur 2: zeigt das Prinzip der vorliegenden Erfindung anhand von Kunden- und Zugangsnetz.
- Figur 3: zeigt ein Ausführungsbeispiel mit Kundennetz und DSL-basiertem Kupfer-Zugangsnetz entsprechend der vorliegenden Erfindung.
- Figur 4: zeigt ein Ausführungsbeispiel mit Kundennetz und PON-basiertem Glasfaser-Zugangsnetz entsprechend der vorliegenden Erfindung.
- Figur 5: zeigt illustrativ die wesentlichen Nachrichten des Energy Efficient Ethernet.

### Detaillierte Beschreibung der Erfindung:

Figur 1 zeigt in schematischer Form die Netztopologie, die den vorstehenden Ausführungen und der Beschreibung des Wirkprinzips der Erfindung zu Grunde liegt: Netzelemente eines Kundennetzes sind über einen Kundennetzknoten mit dem Zugangsnetz verbunden. Dabei enthält der Kundennetzknoten einen NT (network termination) mit Bezug auf das Zugangsnetz und der LT (line termination) wird durch den Zugangsnetzknoten repräsentiert. Das Kundennetz kann z. B. ein Firmennetz sein, dann sind für Büroumgebungen typische Netzelemente (PC, Laptops, VoIP-Telefone, Server, Drucker u. ä.) mit dem Kundennetzknoten verbunden, der durch einen Switch, oder einen Router repräsentiert werden kann. Ebenso kann das Kundennetz ein Heimnetz sein; in diesem Fall ist der Kundennetzknoten ein Home Gateway (HGW, auch als Residential Gateway (RGW), oder Integrated Access Device (IAD), bezeichnet) und typische angeschlossene Geräte können PC, Laptop, Drucker, Telefon sein, aber auch Elemente der Unterhaltungselektronik, wie z. B. Set-Top-Boxen und Fernseher. Allen diesen Anordnungen gemeinsam ist, dass ein Anpassen der Leistungsmodi allenfalls lokal - beschränkt auf das jeweilige Netzsegment - erfolgt: In Kundennetzen können autonome - link-basierte - Mechanismen verwendet werden (z. B. EEE). In zugangsnetzen können die erwähnten Leistungszustände der DSL- und PON-Technik verwendet werden.

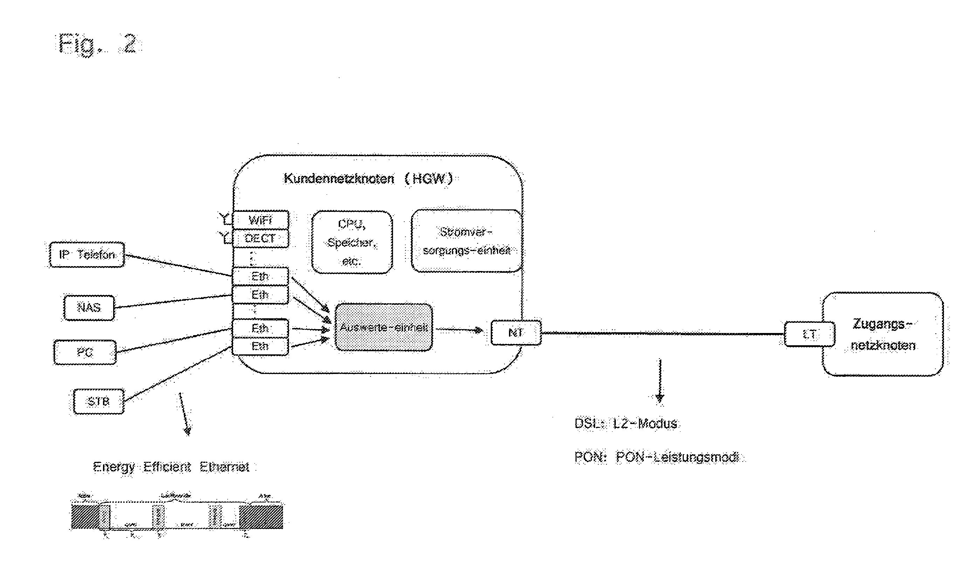

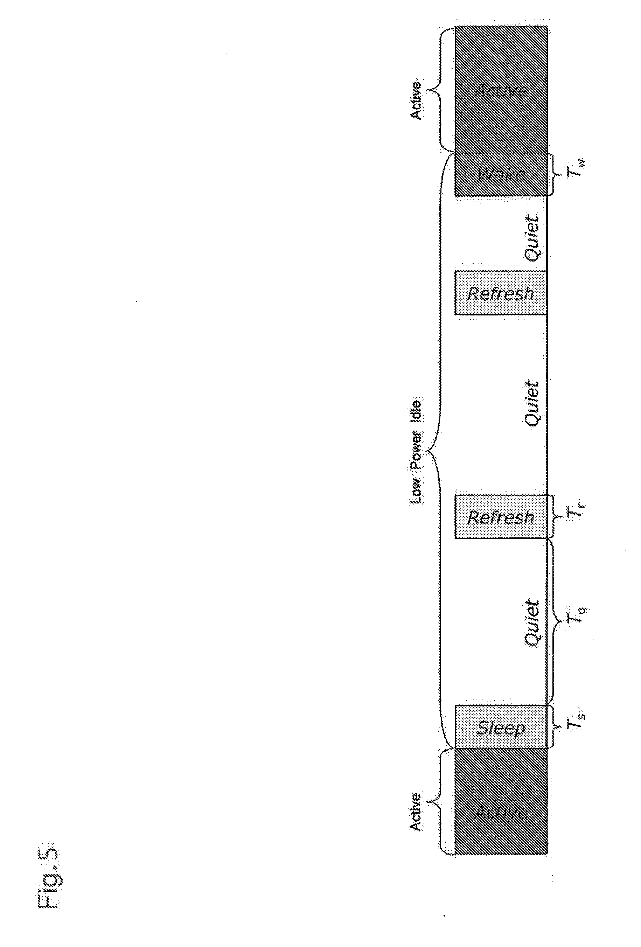

Figur 2 zeigt in schematischer Form den prinzipiellen, hierarchischen Aufbau des zusammenspiels von Kunden- und Zugangsnetz am Beispiel eines Privatkundennetzes mit Home Gateway (HGW) als zentralem Kundennetzknoten sowie einer Zugangsnetzleitung, die beispielhaft als durch DSL-Technik (über Kupfer-Doppelader) oder durch PON-Systeme (über Glasfaser) angenommen wird. An das HGW [4] sind im Kundennetz verschiedene Endgeräte über entsprechende Schnittstellen angeschlossen, z. B. PC (Personal Computer), NAS (Network Attached Storage), STB (Set-Top-Box für IP-TV) und IP-Telefon sowie ggf. DECT-Telefone oder über Funk angeschlossene Endgeräte (WiFi). Insbesondere die über Ethernet-Schnittstellen mit dem HGW verbundenen Geräte nutzen die Technik des Energy Efficient Ethernet [3]; der prinzipielle Aufbau und die Abfolge von EEE-Signalen ist zur unterstützenden Information in Figur 5 dargestellt. EEE verfügt über Sleep-Nachrichten, die eine Active-Periode beenden und in den Schlafmodus überleiten und über Wake-Nachrichten, die eine Active-Periode ankündigen nach einer Quiet-Phase, Diese Nachrichten dienen der internen Kommunikation und Steuerung für die an der Ethernet-Verbindung (EEE) beteiligten Knoten. Es gibt verschiedene Arten von Ethernet-Datenverkehr: Der Verkehr kann intern im Kunden- bzw. Heimnetz bleiben - z. B. vom PC zum NAS - oder er kann extern über das Zugangsnetz und weiter z. B. ins Internet verlaufen. Im Falle von internem Verkehr wirkt das EEE-Protokoll und wird genutzt. Im Falle von externem Verkehr wird die Zugangsverbindung genutzt (im Beispiel DSL oder PON). In diesem Fall werden entsprechend der vorliegenden Erfindung die Wake- und Sleep-Signale zur Steuerung der Leistungszustände auf der Zugangsleitung mit verwendet:

In einer verkehrsschwachen Zeit, in der keine oder wenig Aktivität im Kundennetz beobachtet werden kann (z. B. zu Nachtzeiten) werden im Ethernet lange Quiet-Perioden beobachtet. Die Zugangsleitung kann in einen Zustand mit niedriger Leistung und Bitrate geschaltet werden (L2-Modus im DSL oder PON-Leistungssparzustand). Dies kann dadurch erreicht werden, dass beim Übergang von verkehrsstarken zu verkehrsschwachen Zeiten ab einem Sleep-Paket die Anzahl von Quiet-Perioden (bzw. Refresh-Paketen) durch die Auswerteeinheit gezählt wird und bei Erreichen einer einstellbaren Schwelle (Anzahl) die Information an die Zugangsleitung gegeben wird, in den Modus mit niedriger Bitrate und Leistung zu schalten. Auf diese Weise kann der Zeitpunkt einer Umschaltung zuverlässiger bestimmt werden und es kann ggf. eine höhere Energieeinsparung erreicht werden als mit bisherigen Vorgehensweisen.

Im umgekehrten Fall beim Übergang von Phasen geringer Aktivität zu Phase mit starker Aktivität im Kundennetz werden die Wake-Nachrichten ausgewertet: Wird eine Wake-Nachricht beobachtet, wird die Anzahl der Active-Perioden durch die Auswerteeinheit bestimmt und ab einer bestimmten einstellbaren Schwelle (Anzahl) wird die Zugangsleitung in den Normalmodus mit hoher Bitrate und zugehöriger Leistung geschaltet (L0-Modus im DSL, Normalmodus im PON). Da die Ethernet-Kommunikation burstartig verläuft, können die ersten Daten-Bursts noch im niedrigen Leistungsmodus der Zugangsleitung übertragen werden (mit Pufferung). Dann wird die Zugangsleitung entsprechend der vorliegenden Erfindung nach dem beschriebenen Steuermechanismus in den Normalmodus geschaltet. Bei Systemen, die benachbarte Systeme beeinflussen können, wie z. B. die DSL-Systeme durch das Nebensprechen, wird auf diese Weise außerdem die Leitungsstabilität verbessert, da durch das definierte Schalten mit Auswertung der Steuerinformationen zwischen den Leistungszuständen die sich zeitlich ändernden Nebensprechstörungen besser vorhergesagt und kompensiert werden können.

Auf diese Weise wird der Zustand bezüglich Bitrate und dem damit verbundenem Leistungsverbrauch auf der Zugangsleitung mit Hilfe von Informationen aus dem angeschlossenen Kundennetz gesteuert. Diese Art der übergreifenden Steuerung zwischen Netzsegmenten gestattet es, den Netzbetrieb sowohl energieeffizienter, als auch zuverlässig und stabil zu gestalten.

Die hier am Beispiel von Energy Efficient Ethernet und DSLsowie PON-Systemen beschriebene Vorgehensweise lässt sich prinzipiell auf alle vergleichbaren und ähnlichen Anordnungen anwenden und übertragen, die in hierarchischen Netzen Steuerinformationen in Protokollen übertragen, die zum Signalisieren von Bitraten- und Leistungszuständen dienen.

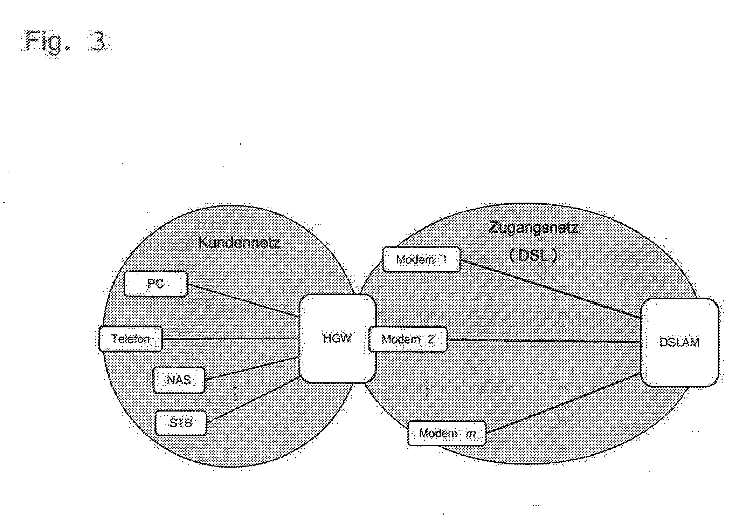

Figur 3 zeigt ein Ausführungsbeispiel des in Figur 2 dargestellten Prinzips als Anordnung der Netzebenen Heimnetz und Zugangsnetz mit DSL-basiertem Kupfer-Zugangsnetz. An den Heimnetzknoten (HGW) sind die Endgeräte des Heimnetzes, wie z. B. IP-Telefon, STB, NAS, PC oder auch DECT-Telefon und funkbasiertes WiFi-Endgerät angeschlossen. Die Verbindung zum DSLAM (digital subscriber line access multiplexer) als Zugangsnetzknoten wird mittels einer DSL-Verbindung von der WAN-Schnittstelle (wide area network) bzw. NT (DSL-Modem) über die Kupfer-Doppelader hergestellt.

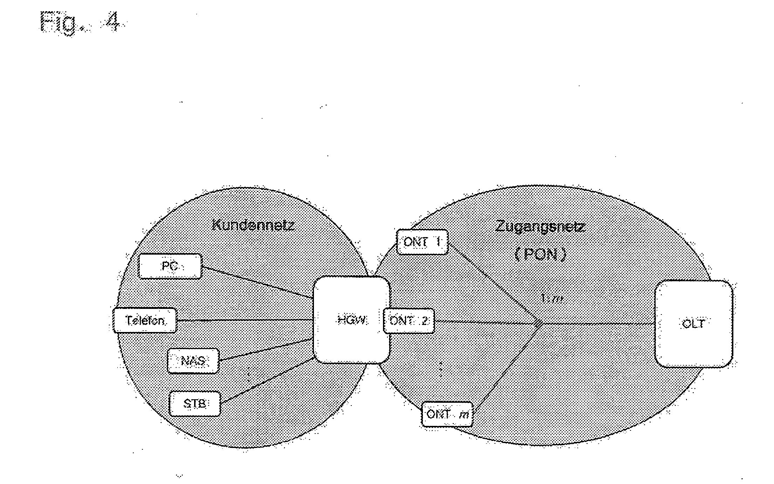

Figur 4 zeigt ein Ausführungsbeispiel des in Figur 2 dargestellten Prinzips als Anordnung der Netzebenen Heimnetz und Zugangsnetz mit PON-basiertem Glasfaser-Zugangsnetz. An den Heimnetzknoten (HGW) sind die Endgeräte des Heimnetzes, wie z. B. IP-Telefon, STB, NAS, PC, oder auch DECT-Telefon und funkbasiertes WiFi-Endgerät angeschlossen. Die Verbindung zum OLT (optical line termination) als Zugangsnetzknoten wird mittels einer PON-Verbindung von der WAN-Schnittstelle (wide area network) bzw. NT (ONT, optical network termination) über die Glasfaser des optischen Verteilnetzes mit l:m-Koppler hergestellt.

Figur 5 zeigt illustrativ die Nachrichten des Energy Efficient Ethernet, die dem beschriebenen beispielhaften technischen Wirkprinzip der vorliegenden Erfindung zu Grunde liegen.

### Literatur und Quellen

[1] ITU-T Recommendation G.992.3: Asymmetric Digital Subscriber Line Transceivers 2 (ADSL2). Genf, 2005
[2] ITU-T Series G. Supplement 45: Means and impact of GPON power saving. White Paper, Genf, 2009
[3] IEEE Std 802.3az™-2010 (Amendment to IEEE Std 802.3™-2008): IEEE Standard for Information technology-Telecommunications and information exchange between systems-Local and metropolitan area networks-Specific requirements. Part 3: Carrier Sense Multiple Access with Collision Detection (CSMA/CD) Access Method and Physical Layer Specifications. Amendment 5: Media Access Control Parameters, Physical Layers, and Management Parameters for Energy-Efficient Ethernet. LAN/MAN Standards Committee of the IEEE Computer Society, Approved 30 September 2010
[4] Home Gateway Initiative: Requirements for an energy efficient home gateway (HGI-RD009-R3), Oktober 2010, S. 23

## Patentansprüche

1. Verfahren zur Steuerung des Energieverbrauchs in einem Zugangsnetz, wobei das Zugangsnetz über einen Kundennetzknoten mit einem Kundennetz verbunden ist, wobei das Zugangsnetz ein Digital Subscriber (DSL) oder Passive Optical Network (PON) ist, deren Geschwindigkeit reduziert wird,
**gekennzeichnet durch** den Kundennetzknoten, der eine Auswerteeinheit aufweist, um die Aktivität im Kundennetz zu überprüfen, umfassend die Schritte:
- Beim Feststellen einer geringen Aktivität im Kundennetz in Richtung des Zugangsnetzes, Herunterschalten der Übertragungsgeschwindigkeit im Zugangsnetz **durch** den Kundennetzknoten;
- Beim Feststellen einer hohen Aktivität vom Kundennetz in Richtung des Zugangsnetzes nach einer vorherigen geringen Aktivität erfolgt ein Hochschalten der Übertragungsgeschwindigkeit im Zugangsnetz **durch** den Kundennetzknoten.

2. Das Verfahren nach dem vorhergehenden Anspruch, wobei das Kundennetzwerk ein Ethernet ist und die Auswerteinheit Nachrichten nach dem Energy Efficient Ethernet Standard überwacht werden, um anhand deren Anzahl eine geringe Aktivität, oder eine hohe Aktivität festzustellen.

3. Das Verfahren nach dem vorhergehenden Anspruch, wobei die Anzahl von Sleep-Paketen, oder Wake-Paketen nach dem Energy Efficient Ethernet Standard überwacht wird, um geringe oder hohe Aktivität festzustellen.

4. Das Verfahren nach dem vorgehenden Anspruch, wobei die Bitrate im Zugangsnetz reduziert wird.

5. Kundennetzwerkknoten, zur Anordnung zwischen einem Kundennetz und einem Zugangsnetz, wobei das Zugangsnetz ein Digital Subscriber (DSL) oder Passive Optical Network (PON) ist, deren Geschwindigkeit reduzierbar, mit Schnittstellen für das Zugangsnetz und das Kundennetz, **gekennzeichnet durch** eine Auswerteinheit, die so ausgestattet und eingerichtet ist, dass eine Überprüfung des Netzwerkverkehrs erfolgt,
- beim Feststellen einer geringen Aktivität im Kundennetz in Richtung des Zugangsnetzes, ein Herunterschalten der Übertragungsgeschwindigkeit im Zugangsnetz **durch** die Auswerteinheit durchführbar ist;
- beim Feststellen einer hohen Aktivität vom Kundennetz in Richtung des Zugangsnetzes nach einer vorherigen geringen Aktivität ein Hochschalten der Übertragungsgeschwindigkeit im Zugangsnetz **durch** die Auswerteinheit durchführbar ist.

6. Kundennetzwerkknoten nach dem vorhergehenden Anspruch, wobei das Kundenetzwerk ein Ethernet ist und die Auswerteinheit Nachrichten nach dem Energy Efficient Ethernet Standard überwacht, anhand deren Anzahl eine geringe Aktivität, oder eine hohe Aktivität feststellbar ist.

7. Kundennetzwerkknoten nach dem vorhergehenden Anspruch, wobei die Anzahl von Sleep-Paketen oder Wake-Pakten nach dem Energy Efficient Ethernet Standard überwacht durch die Auswerteinheit zählbar ist, um geringe oder hohe Aktivität festzustellen. ist.

8. Kundennetzwerkknoten nach dem vorgehenden Anspruch, wobei die Bitrate zur Reduzierung der Geschwindigkeit reduzierbar sind..

## Claims

1. A method for controlling power consumption in an access network, said access network is connected via a customer network node to a client network,
wherein the access network is a digital subscriber (DSL) or Passive Optical Network (PON), of which the speed is reduced,
**characterized by** the customer network node, which has an evaluation unit to control the activity in the customer network, comprising the steps:
- Upon detection of a low level of activity in the customer network in the direction of the access network,
downshifting of the transmission speed in the access network by the client network node;
- Upon detection of a high activity in the customer network in the direction of the access network after a previous low activity up-shifting of the transmission speed in the access network by the client network node.

2. The method according to the preceding claim, wherein the customer network is an Ethernet and the evaluation unit monitors messages according to the Energy Efficient Ethernet standard to determine a low activity or high activity based on their number.

3. The method of the preceding claim, wherein the number of sleep-packets or wake-packets is monitored according to the Energy Efficient Ethernet standard to establish low or high activity.

4. The method according to the preceding claim, wherein the bit rate is reduced In the access network.

5. Customer network nodes for arrangement between a customer network and an access network, the access network is a digital subscriber (DSL) or Passive Optical Network (PON), of which the speed is reduced, with interfaces for the access network and the customer network, **characterized by** a evaluation unit, which provides and is configured to monitor the network traffic
- when detecting a low level of activity in the customer network in the direction of the access network, a downshift of the transmission rate in the access network by the evaluation unit is performed;
- Upon detection of a high activity from the customer network in the direction of the access network following a previous low level activity, an up-shifting of the transmission speed in the access network by the evaluation unit.

6. Customer network node according to the preceding claim, wherein said customer network is an Ethernet, and the evaluation unit monitors messages according to the Energy Efficient Ethernet standard based on the number to determine a low activity, or high activity.

7. Customer network node according to the preceding claim, wherein the number of sleep packets or wake-packets according to the Energy Efficient Ethernet standard is countable by the evaluation unit in order to determine low or high activity.

8. Customer network node according to the preceding claim, wherein the bit rate can be reduced to reduce the speed.

## Revendications

1. Procédé de commande de la consommation électrique au sein d'un réseau d'accès, ledit réseau d'accès étant connecté via un réseau consommateur à un réseau client,
dans lequel le réseau d'accès est un réseau d'abonné numérique (DLS) ou un réseau optique passif (PON), dont la vitesse est réduite,
**caractérisé en ce que** le noeud de réseau client, présentant une unité d'évaluation pour la commande de l'activité du réseau client, comporte les étapes :
- réduction de la vitesse de transmission au sein du réseau d'accès par le noeud de réseau client en réponse à la détection d'une baisse d'activité au sein du réseau client en direction du réseau d'accès ;
- accroissement de la vitesse de transmission au sein du réseau d'accès par le noeud de réseau client en réponse à la détection d'un surcroît d'activité au sein du réseau client en direction du réseau d'accès, postérieurement à une baisse d'activité.

2. Le procédé selon la revendication précédente, dans lequel le réseau client est un réseau Ethernet et l'unité d'évaluation fait le suivi des messages en fonction du standard Ethernet à haute efficacité énergétique (EEE), sur la base de leur nombre, pour la détermination d'une baisse d'activité ou d'un surcroît d'activité.

3. Le procédé selon la revendication précédente, dans lequel le nombre de paquets dormants ou de paquets d'éveil est suivi en fonction du standard Ethernet à haute efficacité Energétique pour la détermination d'une baisse ou d'un surcroît d'activité.

4. Le procédé selon la revendication précédente ; dans lequel le taux de bit est réduit au sein du réseau d'accès.

5. Un noeud de réseau client pour une disposition entre une réseau client et un réseau d'accès, le réseau d'accès étant un réseau d'abonné numérique (DLS) ou un réseau optique passif (PON), dont la vitesse est réduite, avec des interfaces pour le réseau d'accès et le réseau client, **caractérisés par** une unité d'évaluation, laquelle fournit et est configuré pour le suivi du trafic réseau, avec
- une réduction de la vitesse de transmission au sein du réseau d'accès par le noeud de réseau client en réponse à la détection d'un faible niveau d'activité au sein du réseau client en direction du réseau d'accès ;
- un accroissement de la vitesse de transmission au sein du réseau d'accès par le noeud de réseau client en réponse à la détection d'un surcroît d'activité au sein du réseau client en direction du réseau d'accès, postérieurement à une baisse d'activité.

6. Un noeud de réseau client selon la revendication précédente, dans lequel ledit réseau client est Ethernet, et l'unité d'évaluation fait le suivi des messages en fonction du standard Ethernet à haute efficacité énergétique (EEE), sur la base de leur nombre, pour la détermination d'une baisse d'activité ou d'un surcroît d'activité.

7. Un noeud de réseau client selon la revendication précédente, dans lequel le nombre de paquets dormants ou de paquets d'éveil est décompté par l'unité d'évaluation en fonction du standard Ethernet à haute efficacité Energétique pour déterminer une baisse ou un surcroît d'activité.

8. Le noeud de réseau client selon la revendication précédente, dans lequel le taux de bit peut être réduit pour limiter la vitesse.
